# EUROPEAN PATENT APPLICATION

(11) **EP 4 343 535 A1**
(43) Date of publication of application: **27.03.2024**
(21) Application number: 23182695.9
(22) Date of filing: 30.06.2023
(51) Int. Cl.: G06F 7/544, G06F 15/78

(54) **METHOD AND APPARATUS FOR OPERATING MEMORY PROCESSOR**

(30) Priority: 22.09.2022 KR 20220120080
(71) Applicant: Samsung Electronics Co., Ltd., Suwon-si, Gyeonggi-do 16677 (KR)
(72) Inventor: Chang, Dong-Jin, 16678 Suwon-si, Gyeonggi-do (KR); Kwon, Soon-Wan, 16678 Suwon-si, Gyeonggi-do (KR); Yun, Seok Ju, 16678 Suwon-si, Gyeonggi-do (KR); Lee, Jaehyuk, 16678 Suwon-si, Gyeonggi-do (KR); Myung, Sungmeen, 16678 Suwon-si, Gyeonggi-do (KR); Yoon, Daekun, 16678 Suwon-si, Gyeonggi-do (KR)
(74) Representative: Grünecker Patent- und Rechtsanwälte PartG mbB

(57) **Abstract**

Provided is a computation method of a memory processor configured to perform an operation between a first vector including first elements and a second vector including second elements, the first elements including respective first bits and the second elements including respective second bits, the method performed by the memory processor including: applying, to single-bit operation gates, the respective first bits and the respective second bits; obtaining bit operation result sum values for the respective first and second elements based on bit operation results obtained using the single-bit operation gates; and obtaining an operation result of the first vector and the second vector based on the bit operation result sum value.

## Description

### BACKGROUND

### 1. Field

The following description relates to a method and device with an operation of a memory processor.

### 2. Description of Related Art

A memory device may be functionally separated from a processor configured to perform computation. Between the memory device and the processor in a system (e.g., a neural network, big data, an internet of things (IoT) system, etc.) that requires a large amount of computation of data, a great amount of data may be transmitted and received between components such as the processor and memory, and a bottleneck phenomenon may thus occur frequently. Thus, to solve such an issue, there is ongoing research on in-memory computing (IMC) devices, which are memory devices with a memory function combined with a processor function for performing computation on data as it remains stored in the memory.

Deep neural networks (DNNs) are leading an industrial revolution based on artificial intelligence (Al). A neural network may be implemented (e.g., trained, perform an inference, etc.) by performing a multiply-accumulate (MAC) operation that repeats multiplication and addition using a considerably large number of matrices that are often large. Whereas the execution of applications of neural networks using general-purpose processors may require a considerably great amount of computation, relatively simple operations such as a MAC operation of calculating an inner product of two vectors and accumulating and adding corresponding values may be performed through IMC devices.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

The invention is claimed in the independent claims. Preferred embodiments are specified in the dependent claims.

In one general aspect, there is a computation method of a memory processor configured to perform an operation between a first vector including first elements and a second vector including second elements, the first elements including respective first bits and the second elements including respective second bits, the method performed by the memory processor including: applying, to single-bit operation gates, the respective first bits and the respective second bits; obtaining bit operation result sum values for the respective first and second elements based on bit operation results obtained using the single-bit operation gates; and obtaining an operation result of the first vector and the second vector based on the bit operation result sum value.

The first vector may be data input through an input controller, and the second vector may be data stored in the memory processor.

The first vector may be input data, and the second vector may be weight data.

The single-bit operation gates may be configured to perform at least one of an AND operation or an XOR operation.

The single-bit operation gates may be configured to be capable of performing at least two operations from the group of an AND operation, an OR operation, a NOR operation, a NOT operation, a NAND operation, and an XOR operation, and wherein which of the two operations may be performed may be based on an operation control signal.

The first bits and the second bits may be applied to the single-bit operation gates as part of a process of sequentially applying bits of the elements of the vectors to the single-bit operation gates.

The sequentially applying may start with a most significant bit (MSB) or a least significant bit (LSB) of each of the elements.

The obtaining of the bit operation result sum value may include adding bit operation results respectively corresponding to the elements.

The adding the bit operation results may be performed using a single-bit Wallace tree.

The adding the bit operation results may be performed using hardware implementing approximate arithmetic.

The obtaining of the bit operation result sum value may include obtaining a sum value determined based on whether the first bits and the respective second bits are the same.

The obtaining of the operation result of the first vector and the second vector may include: when the single-bit operation gates are AND operation gates, obtaining a multiplication result of the first vector and the second vector based on the bit operation result sum value.

The obtaining of the operation result of the first vector and the second vector may include: when the single-bit operation gates are XOR operation gates, obtaining a similarity between the first vector and the second vector based on the bit operation result sum value.

A non-transitory computer-readable storage medium may store instructions that, when executed by a processor, cause the processor to perform any of the methods.

In one general aspect, a memory device is configured to perform an operation, and the memory device includes: single-bit operation gates configured to perform an operation between respective first bits and respective second bits, the first bits being bits of respective first elements of a first vector, the second bits being bits of respective second elements of a second vector; a summation module configured to obtain bit operation result sum values for the respective first and second elements based on bit operation results obtained using the single-bit operation gates; and an arithmetic module configured to obtain a multiplication result of the first vector and the second vector or to obtain a similarity between the first vector and the second vector, based on the bit operation result sum value.

The memory device may further include an input controller configured to sequentially apply bits of the first elements and bits of the second elements to the single-bit operation gates.

The summation module may include at least one of a first summation module configured to add the bit operation results or a second summation module configured to add the bit operation results for by implementing approximate arithmetic.

The first summation module may have at least one single-bit Wallace tree structure.

The second summation module may include an accumulator including at least one of a NAND operation gate or an OR operation gate, and may be configured to obtain an adding result based on approximate arithmetic.

The arithmetic module may include at least one of a multiplexer (MUX), an adder, a shift adder configured to obtain a multiplication result based on the bit operation result sum value, or an accumulator configured to store an intermediate arithmetic value received from the shift adder.

The operation may be a multiplication of the first vector and the second vector, and the MUX may be configured to apply the bit operation result sum value to the shift adder.

The operation may calculate a similarity between the first vector and the second vector, and the MUX may be configured to apply the bit operation result sum value to the adder.

Other features and aspects will be apparent from the following detailed description, the drawings, and the claims.

### BRIEF DESCRIPTION OF THE DRAWINGS

FIG. 1 illustrates an example of a computation method of a memory processor according to one or more example embodiments.
FIG. 2 illustrates an example of a single-bit operation gate according to one or more example embodiments.
FIG. 3 illustrates an example of an arithmetic module according to one or more example embodiments.
FIG. 4 illustrates an example of structure of a memory device for implementing a single-bit operation gate-based memory processor according to one or more example embodiments.
FIG. 5 illustrates an example of space efficiency of a memory device for implementing a single-bit operation gate-based memory processor according to one or more example embodiments.
FIG. 6 illustrates an example of a computation method of a memory processor according to one or more example embodiments.
FIG. 7 illustrates an example of an electronic device according to one or more example embodiments.
Throughout the drawings and the detailed description, unless otherwise described or provided, the same drawing reference numerals will be understood to refer to the same elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known after an understanding of the disclosure of this application may be omitted for increased clarity and conciseness.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

The terminology used herein is for describing various examples only and is not to be used to limit the disclosure. The articles "a," "an," and "the" are intended to include the plural forms as well, unless the context clearly indicates otherwise. As used herein, the term "and/or" includes any one and any combination of any two or more of the associated listed items. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof.

Throughout the specification, when a component or element is described as being "connected to," "coupled to," or "joined to" another component or element, it may be directly "connected to," "coupled to," or "joined to" the other component or element, or there may reasonably be one or more other components or elements intervening therebetween. When a component or element is described as being "directly connected to," "directly coupled to," or "directly joined to" another component or element, there can be no other elements intervening therebetween. Likewise, expressions, for example, "between" and "immediately between" and "adjacent to" and "immediately adjacent to" may also be construed as described in the foregoing.

Although terms such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

Unless otherwise defined, all terms, including technical and scientific terms, used herein have the same meaning as commonly understood by one of ordinary skill in the art to which this disclosure pertains and based on an understanding of the disclosure of the present application. Terms, such as those defined in commonly used dictionaries, are to be interpreted as having a meaning that is consistent with their meaning in the context of the relevant art and the disclosure of the present application and are not to be interpreted in an idealized or overly formal sense unless expressly so defined herein. The use of the term "may" herein with respect to an example or embodiment, e.g., as to what an example or embodiment may include or implement, means that at least one example or embodiment exists where such a feature is included or implemented, while all examples are not limited thereto.

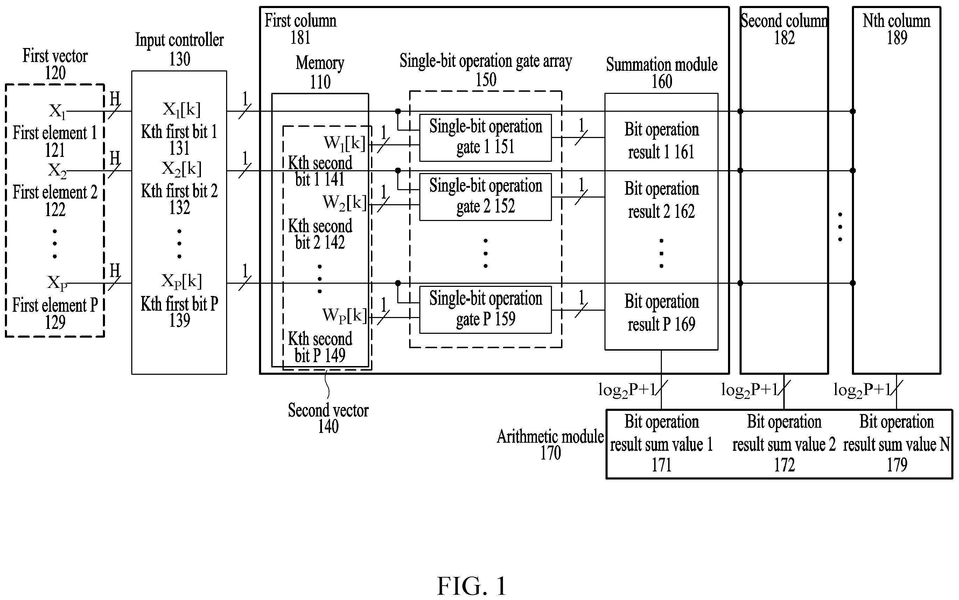

FIG. 1 illustrates an example of a computation method of a memory processor according to one or more example embodiments.

A crossbar for in-memory computing (IMC) may be configured to perform a matrix multiplication and may generally perform a multiply-accumulate (MAC) operation. The crossbar may have multiple columns, and each column may include P bit cells (e.g., B1 through BP). The MAC operation may be performed with the P bit cells of any of the columns. For example, a multiplication may be performed in a bit-cell unit and an accumulation may be performed in a column unit (i.e., for the multiplication results of the bit-cells in the column unit).

To perform the MAC operation in a low-power computing environment, techniques for performing an operation in an analog domain may be used. However, in the analog domain, the operation is performed using a physical phenomenon, and thus some issues related to noise occurring in a general natural phenomenon may occur. These issues may result in computational errors. Thus, a technology for a digital MAC operation-based IMC crossbar device may be used. The power efficiency and area efficiency of a digital circuit have been improved greatly, and a noiseless characteristic has also been improved. Accordingly, in an IMC structure, a digital implementation may exhibit better performance and characteristics than an analog implementation.

As an example, there may be a digital IMC device. The digital IMC device may use an IMC macro-structure that performs a MAC operation on an input and a weight, for example (although the structure of an IMC device may be applied to any type of data). In such a structure, a multi-bit input and weight operation may include multiplying an H-bit weight and a 1-bit input. In this case, the MAC operation may be performed by adding H-bit SN[H:1] which is a multiplication value of the H-bit weight and the 1-bit input, through a digital accumulator. By performing this operation H times while changing a bit position of the input each time, the MAC operation on an H-bit input and the H-bit weight may be completed.

As another example of an IMC device, there may be a multi-function IMC device. The multi-function IMC device may be of a structure enabling various operations based on a 1-bit operation. For example, the multi-function IMC may implement a part corresponding to a multiplication of a digital MAC operation in the form of dynamic logic and vary an input signal to perform at least one operation among a multiplication (AND), XOR, and OR. This may allow IMC to be used in various application fields. For example, the IMC structure may be used for computing Hamming distance.

According to an example embodiment, approximate arithmetic may be used to reduce the needed computation. By implementing approximate arithmetic, the accumulator may not be implemented as a full adder, but an approximate logic may be implemented using a NAND gate or an OR gate. From this, an effect of improvement in area needed (or computation per unit of area) and power consumption may be expected.

The example shown in FIG. 1 may include a first vector 120, an input controller 130, a second vector 140, a memory 110, a single-bit operation gate array 150, single-bit operation gates (e.g., 151, 152, ..., 159), a summation module 160, and an arithmetic module 170.

A computation method of a memory processor according to an example embodiment may be a method for implementing IMC. The computation method of the memory processor may be implemented through operators positioned near memory of an IMC device. The operators may be implemented through operation gates (or logic gates).

An operation of the memory processor may be an operation between vectors of elements where the vectors are the operands. A vector may include a plurality of elements. For example, a vector may be represented as (element 1, element 2, ..., element n). Each of the elements may be in the form of one or more bits. As non-limiting examples, an element may be 8 bits or 4 bits. One or more bits representing an element may be applied to an operation gate. According to an example embodiment, among the one or more bits representing an element, one bit may be applied to the operation gate. The operation gate may be a single-bit operation gate. An overall operation on elements having more than one bit may involve multiple bit-wise operations on the bits of each element and accumulation of the bit-wise results.

A memory device according to an example embodiment may apply, to single-bit operation gates, a first bit which is one of one or more bits representing each of first elements included in a first vector and a second bit which is one of one or more bits representing each of second elements included in a second vector.

Referring to FIG. 1, the first vector 120 applied to the memory device may include first element 1 121, first element 2 122, ..., and first element P 129. Each of the elements may be one or more bits. As shown in FIG. 1, an element may be H bits. In addition, the input controller 130 may apply, to the memory 110, the H bits by 1 bit (for example, by streaming). For example, kth first bit 1 131 of first element 1 121 may be applied to the memory 110 as an operand for an operation. In this example, k is an index representing any of 1 to k bit digits. When elements are one or more bits, there may be a bit digit indicating a position of each of the bits. For example, a higher value may be assigned in ascending order from the right of bit digits. For another example, a bit digit may be represented using a most significant bit (MSB) or a least significant bit (LSB).

The first vector 120 may be input to the memory 110 through the input controller 130, and the second vector 140 may be a vector stored in the memory 110. In an example, in a neural network operation, a first vector may be input data and a second vector may be a weight. In this example, when the input data is applied to the weight while the weight is stored in the memory 110, a matrix multiplication operation (or a vector multiplication operation) between the input data and the weight may be performed. In another example, in a neural network operation, a first vector may be a weight and a second vector may be input data. In this example, when the weight is applied while the input data is stored in the memory 110, a matrix multiplication operation (or a vector multiplication operation) between the input data and the weight may be performed. As noted above, embodiments described herein, although readily applicable to weights of neural networks, are not limited to any particular type of data.

The second vector 140 may be persistently (although not necessarily statically) stored in the memory 110. In this case, second elements that make up the second vector 140 may also be in the form of one or more bits. Referring to FIG. 1, one or more bits of a second element may correspond to a column. For example, when a second element is 1 bit, there may be one column corresponding to the element. For another example, when a second element is N bits, there may be N columns corresponding to the element. Referring to FIG. 1, when a second element is N bits, columns may include a first column 181, a second column 182, ..., and an Nth column 189.

There may be a plurality of columns, and in some embodiments the memory device may thus be capable of performing a multi-bit operation in addition to a single-bit operation.

In an example, for an operation of a kth bit of a first element and a kth bit of a second element, the bits may be applied to a corresponding single-bit operation gate. For example, as shown, for an operation of kth first bit 2 132 of a first element and kth second bit 2 142 of a second element, the bits may be applied to single-bit operation gate 2 152. For another example, as shown, for an operation of kth first bit 2 132 of the first element and mth second bit 2 142, the bits may also be applied to single-bit operation gate 2 152. In this example, m and k may be the same or different.

When computing on a first bit of an element, an operation may be performed in the first column 181. In this case, to compute a first bit of a first element and a first bit of a second element, the bits may be applied to a single-bit operation gate.

When computing an Nth bit of an element, an operation may be performed in the Nth column 189. In this case, to compute an Nth bit of a first element and an Nth bit of a second element, the bits may be applied to a single-bit operation gate.

The memory device may sequentially apply the first bits 131, 132, ..., and 139 and the second bits 141, 142, ..., and 149 to the single-bit operation gates 151, 152, ..., and 159 based on bit digits. The memory device may sequentially apply first bits and second bits to single-bit operation gates, starting with at least one bit that may be an MSB or an LSB. In an example, the memory device may perform a single-bit operation while moving bit by bit toward the MSB starting from the LSB of the elements. For example, after applying an LSB of a first element and an LSB of a second element to a single-bit operation gate, the memory device may apply an LSB+1 of the first element and an LSB+1 of the second element to a single-bit operation gate. In another example, the memory device may perform a single-bit operation while moving bit by bit toward the LSB starting from the MSB of the elements. For example, after applying an MSB of a first element and an MSB of a second element to a single-bit operation gate, the memory device may apply an MSB-1 of the first element and an MSB-1 of the second element to a single-bit operation gate.

The memory device may perform an Nth bit operation over a plurality of elements included in a vector in parallel. Referring to FIG. 1, an operation of an Nth bit of first elements included in a first vector and an Nth bit of second elements included in a second vector may be performed in parallel. For example, kth first bit 1 131 of a first element, kth first bit 2 132 of the first element, ..., and kth first bit P 139 of the first element may be simultaneously applied to the memory 110 so that the Nth bit operations may be performed in parallel.

Accordingly, performing bit operations in parallel may be effective in terms of the computation speed and may further be effective in terms of the power efficiency of the memory device.

In some embodiments, the number of bits representing each first element may be the same as the number of bits representing each second element. For example, when a first element is represented by N bits, the second element may also be represented by N bits.

According to an example embodiment, a single-bit operation gate may be a logic gate that receives two single bits. The single-bit operation gate may include at least one of an AND operation gate, an OR operation gate, a NOR operation gate, or an XOR operation gate. The single-bit operation gate may perform at least one of an AND operation or an XOR operation.

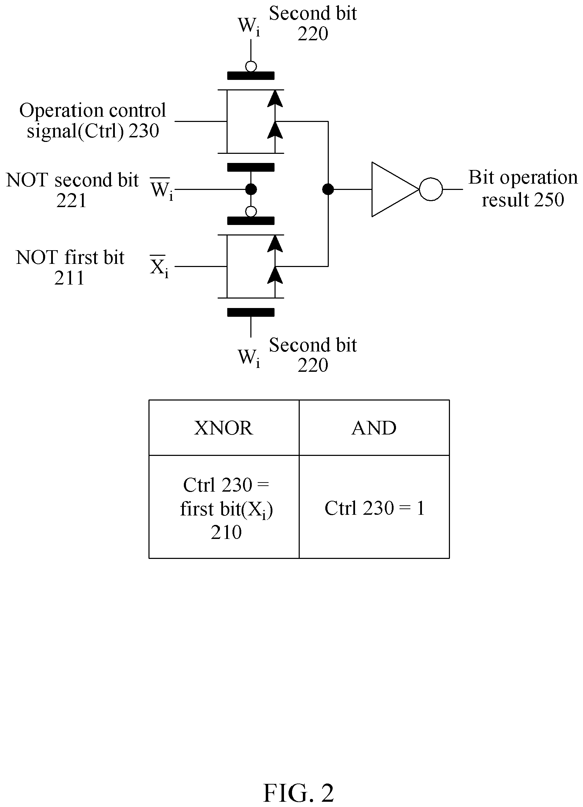

According to an example embodiment, the single-bit operation gate may perform at least one of an AND operation, an OR operation, a NOR operation, a NOT operation, a NAND operation, or an XOR operation based on an operation control signal. A method of determining an operation based on an operation control signal will be described in detail below with reference to FIG. 2.

In some embodiments, the memory device may obtain at least one bit operation result sum value for each bit digit of elements based on bit operation results obtained using single-bit operation gates. That is, regardless of which bit operation is performed, the results of the single-bit operation gates may be summed.

A bit operation result may be an output of a single-bit operation gate. For example, a bit operation result may be an operation result of an Nth bit of a first element and an Nth bit of a second element. Referring to FIG. 1, bit operation result P 169 may be a value obtained by applying kth first bit P 139 of a first element and kth second bit P 149 of a second element to single-bit operation gate P 159.

The bit operation result sum value may be determined based on the bit operation results. Referring to FIG. 1, bit operation result sum value 1 171 may be determined based on bit operation result 1 161, bit operation result 2 162, ..., and bit operation result P 169. The bit operation result sum value may be obtained for each bit digit of the elements. For example, when an element is represented by N bits, there may be N bit operation result sum values for each element. Referring to FIG. 1, there may be a bit operation result sum value corresponding to each column, and when an element is represented by N bits, bit operation result sum value 1 171, bit operation result sum value 2 172, ..., and bit operation result sum value N 179 may be obtained. When an element is represented by P bits, the size of a bit operation result sum value may be at most log₂P + 1 bits.

In some embodiments, the memory device may add bit operation results respectively corresponding to elements, for each bit digit. Referring to FIG. 1, there may be bit operation result P 169 corresponding to a first element P and a second element P. For example, the memory device may add bit operation result 1 161, bit operation result 2 162, ..., and bit operation result P 169.

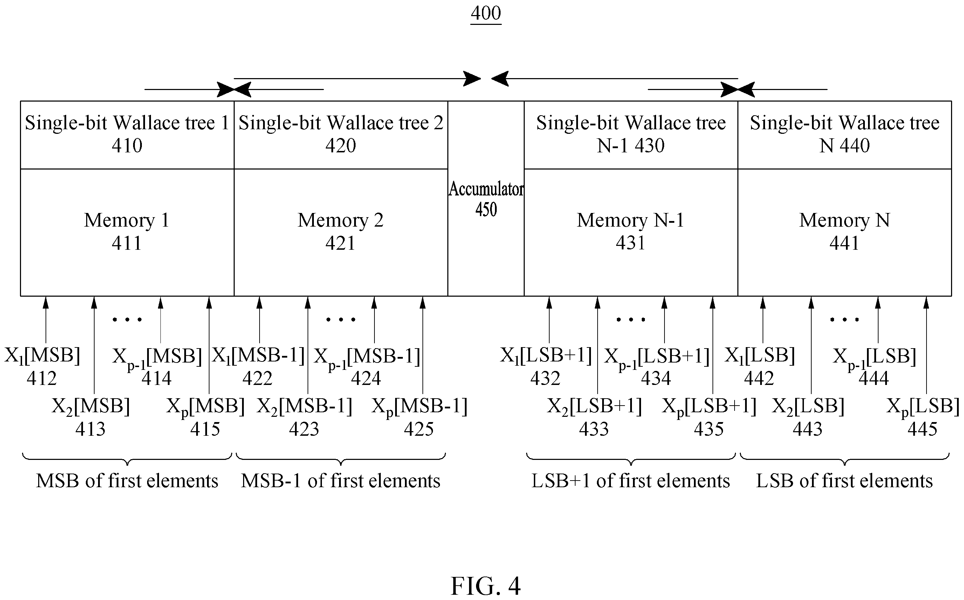

According to an example embodiment, such a process of adding bit operation results for each bit digit may be implemented through a plurality of adders. According to an example embodiment, the memory device may add bit operation results for each bit digit by using a single-bit Wallace tree. In the memory device, the single-bit adders may be arranged based on a Wallace tree structure. The structure will be described in detail below with reference to FIG. 4. A Wallace tree is a hardware implementation of a binary multiplier which is a digital circuit that multiplies two integers. A full adder and/or a half adder may be used to add stepwise partial products until two bits remain. Using the Wallace tree may reduce steps for adding stepwise the partial products. When the steps for adding the stepwise partial products are reduced, the number of adders to be used may be reduced accordingly. The reduction in the number of adders may increase the space efficiency of the memory device. Accordingly, effectively arranging memory cells and operators in a limited area may improve the performance of the memory device.

According to another example embodiment, the memory device may obtain a result of adding bit operation results for each bit digit based on an approximate arithmetic implementation in a device. Approximate arithmetic may be used in a computing system with integer, fixed-point, or floating-point algorithms due to finite precision. The finite precision means that the accuracy of an operation result may decrease due to an error that may occur in a single-bit operation gate or other operation gates. Therefore, approximate arithmetic may be used to derive an approximate arithmetic result to increase the arithmetic accuracy by estimating such a potential error.

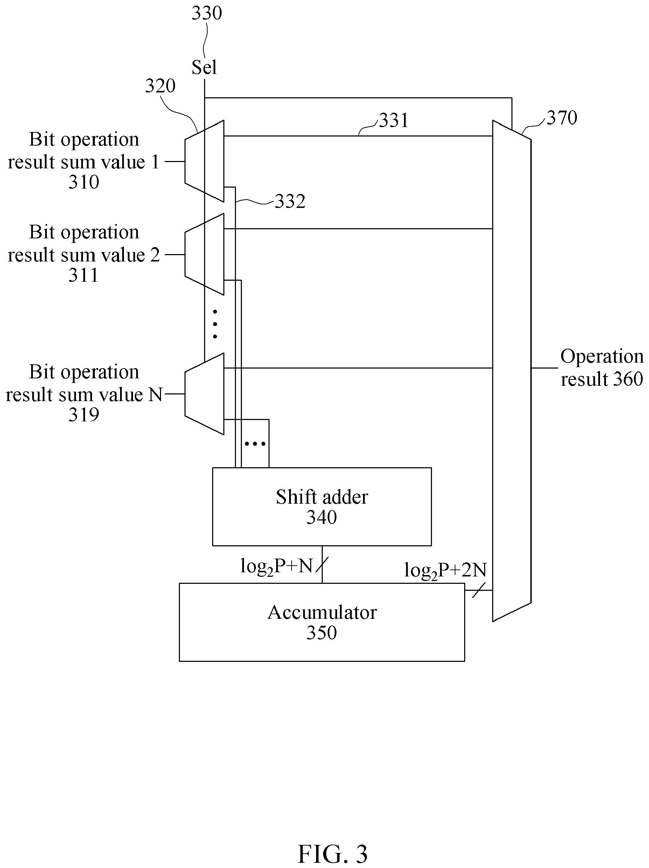

According to some embodiments, a result of adding bit operation results for each bit digit may be included in a multiplication operation of the first vector 120 and the second vector 140. As described above regarding an adding result, a result of adding bit operation results may be a result of simply adding the bit operation results or may be a result of adding bit operation results based on approximate arithmetic. According to an example embodiment, when the single-bit operation gates are (or are functioning as) AND operation gates, the memory device may obtain a multiplication result of the first vector 120 and the second vector 140 based on at least one bit operation result sum value. A method of obtaining a multiplication result of a first vector and a second vector based on at least one bit operation result sum value will be described in detail below with reference to FIG. 3.

According to some embodiments, the memory device may obtain a sum value determined based on whether a first bit and a second bit are the same. For example, the memory device may be used to calculate a similarity between the first vector 120 and the second vector 140. The memory device may calculate a Hamming distance to calculate the similarity between the first vector 120 and the second vector 140, the Hamming distance being the number of bit differences of two strings having the same length. For example, when a first bit and a second bit are the same, 1 may be obtained from a single-bit operation gate. When the first bit and the second bit are different, zero (0) may be obtained from the single-bit operation gate. Accordingly, as the number of bits having different bit values in the first vector and the second vector increases, the Hamming distance increases.

When the single-bit operation gates are XOR operation gates, the memory device may obtain a similarity between the first vector 120 and the second vector 140 based on at least bit operation result sum value (i.e., the reverse of the Hamming distance). A method of obtaining a similarity between a first vector and a second vector based on at least one bit operation result sum value will be described in detail below with reference to FIG. 3.

According to an example embodiment, the memory device may include the input controller 130, the plurality of single-bit operation gates 151, 152, ..., and 159, the summation module 160, and the arithmetic module 170.

The input controller 130 may sequentially apply a first bit and a second bit to single-bit operation gates based on bit digits. For example, the input controller 130 may sequentially apply the kth first bit 1 131 of first element 1 121 to the memory 110 based on a bit digit.

The single-bit operation gate array 150 may include the plurality of single-bit operation gates 151, 152, ..., and 159. The single-bit operation gates 151, 152, ..., and 159 may be single-bit operation gates for performing operations on first bits of each first element included in a first vector and second bits of each second element included in a second vector.

The summation module 160 may generate a bit operation result sum value based on bit operation results. According to an example embodiment, the summation module 160 may generate a result of adding the bit operation results. The summation module 160 may include a first summation module for adding the bit operation results for each bit digit. The first summation module may have at least one single-bit Wallace tree structure. According to another example embodiment, the summation module 160 may generate a result of adding the bit operation results based on approximate arithmetic. The summation module 160 may include a second summation module for adding the bit operation results for each bit digit based on approximate arithmetic. The second summation module may include an accumulator including at least one of a NAND operation gate or an OR operation gate and may be a module for calculating an adding result with hardware that implements approximate arithmetic.

According to an example embodiment, the arithmetic module 170 may obtain a multiplication result of the first vector and the second vector based on the at least one bit operation result sum value. The arithmetic module 170 is described with reference to FIG. 3.

In some embodiments, the arithmetic module 170 may be a module for obtaining a similarity between the first vector and the second vector based on the at least one bit operation result sum value. The similarity may be a Hamming distance.

FIG. 2 illustrates an example of a single-bit operation gate according to one or more example embodiments.

The single-bit operation gate shown in FIG. 2 is an example and embodiments are not limited thereto. In the example of FIG. 2, there are a first bit 210(e.g., Xᵢ), a NOT first bit 211(e.g., Xᵢ (overlined)), a second bit 220(e.g., Wᵢ), a NOT second bit 221(e.g., Wᵢ (overlined)), an operation control signal 230, and a bit operation result 250.

The single-bit operation gate may perform an XNOR operation or an AND operation according to the value of the operation control signal 230.

The single-bit operation gate may be controlled to perform an XNOR operation. For example, when the operation control signal 230 (e.g., Ctrl) is a first bit 210 (e.g., Ctrl = Xᵢ), the single-bit operation gate may output the bit operation result 250 which is a result of the XNOR operation. For example, when a first bit is 1, the NOT first bit may be zero (0). When the single-bit operation gates perform the XNOR operation, the memory device may obtain a Hamming distance between a first vector (e.g., the first vector 120) and a second vector (e.g., the second vector 140).

The single-bit operation gate may also be controlled to perform an AND operation. For example, when the operation control signal 230 is 1, the single-bit operation gate may output the bit operation result 250 which is a result of the AND operation. When the single-bit operation gates performs the AND operation, the memory device may obtain a multiplication result between the first vector 120 and the second vector 140.

Through this, multiplication (e.g., a MAC operation) or similarity (e.g., a Hamming distance) calculation between vectors may be performed through hardware of a single structure, and thus there are more applications of the memory device.

FIG. 3 illustrates an example of an arithmetic module according to one or more example embodiments.

The arithmetic module 170 may include at least one of a multiplexer (MUX) 320, an adder 370, a shift adder 340 for calculating a multiplication result based on at least one bit operation result sum value, or an accumulator 350 for storing an intermediate arithmetic value received from the shift adder 340.

As shown in FIG. 3, the arithmetic module 170 may obtain a multiplication result of a first vector (e.g., the first vector 120) and a second vector (e.g., the second vector 140) or a similarity between the first vector 120 and the second vector 140, based on a selection signal 330.

According to an example embodiment, the arithmetic module 170 may obtain the multiplication result of the first vector 120 and the second vector 140 based on at least one bit operation result sum value. When an operation is a multiplication of the first vector 120 and the second vector 140, at least one bit operation result sum value may be applied to the shift adder 340. For example, bit result operation result sum value 1 310, bit operation result sum value 2 311, ..., and bit operation result sum value N 319 may be sequentially applied to the shift adder 340. When the selection signal 330 selects calculating the multiplication result, the MUX 320 may apply a bit operation result sum value to the shift adder 340 in step 332. The shift adder 340 may implement a partial sum in a matrix multiplication. The shift adder 340 may receive bit operation result sum values and shift the bit operation result sum values according to bit digits. The size of data transmitted from the shift adder 340 to the accumulator 350 may be at most log₂P + N bits, in which P may be the number of bits representing an element and N may be the number of columns. The accumulator 350 may apply a final multiplication result to the adder 370, and the adder 370 may output the multiplication result as an operation result 360 according to the selection signal 330. The size of data applied from the accumulator 350 to the adder 370 may be at most log₂P + 2N bits.

According some embodiments, the arithmetic module 170 may obtain the similarity between the first vector 120 and the second vector 140 based on at least one bit operation result sum value. When the selection signal 330 selects calculating the similarity, the MUX 320 may directly apply the bit operation result sum value to the adder 370. For example, the adder 370 may receive the selection signal 330, add bit operation result sum values received from a plurality of multiplexers, and output the similarity (e.g., a Hamming distance) as the operation result 360.

Accordingly, the memory device may selectively perform an operation of calculating a similarity between vectors or a multiplication operation between vectors, through the arithmetic module 170. Therefore, various operations may be performed through a single hardware structure, and thus the memory device may diversify computation application fields while improving space efficiency, as described below.

FIG. 4 illustrates an example of structure of a memory device for implementing a computation method of a single-bit operation gate-based memory processor according to one or more example embodiments.

The number of memories shown in FIG. 4 is provided merely as an example, and examples are not limited thereto.

MSBs of first elements included in a first vector (e.g., the first vector 120) may be applied to memory 1411 through an input controller. For example, the MSBs of the first elements, for example, X₁[MSB] 412, X₂[MSB] 413, ..., Xₚ₋₁[MSB] 414, and Xₚ[MSB] 415, may be applied to memory 1 411.

A bit corresponding to a column may be stored in a memory. For example, a bit corresponding to a column of second elements may be stored in memory 1 411. In the case of a single-bit operation, pieces of data stored in one column may be used. In the case of an 8-bit operation, pieces of data stored in eight columns may be used. For example, when a corresponding column is a column corresponding to an MSB of a second element, MSBs of second elements, for example, W₁[MSB], W₂[MSB], ..., Wₚ₋₁[MSB], and Wₚ[MSB], may be stored in memory 1 411. For another example, when a bit corresponding to the column of the second elements is MSB-2, W₁[MSB-2], W₂[MSB-2], ..., Wₚ₋₁[MSB-2], and Wₚ[MSB-2] may be stored in memory 1 411. The MSBs of the first elements and the MSBs of the second elements may be applied to single-bit operation gates, and a plurality of bit operation results may thereby be obtained. Although omitted from FIG. 4, a single-bit operation gate array (e.g., the single-bit operation gate array 150) may be positioned between a single-bit Wallace tree and a memory. Accordingly, the bit operation results may be applied to single-bit Wallace tree 1 410. Bit operation result sum values (e.g., an output value of a single-bit Wallace tree) corresponding to bit digits may be added, and an intermediate product may be stored in an accumulator 450.

The operations described above may be performed in the same manner in memory 2 421, memory N-1 431, and memory N 441.

The position or arrangement of the accumulator 450 of FIG. 4 is provided merely an example, and examples are not limited thereto.

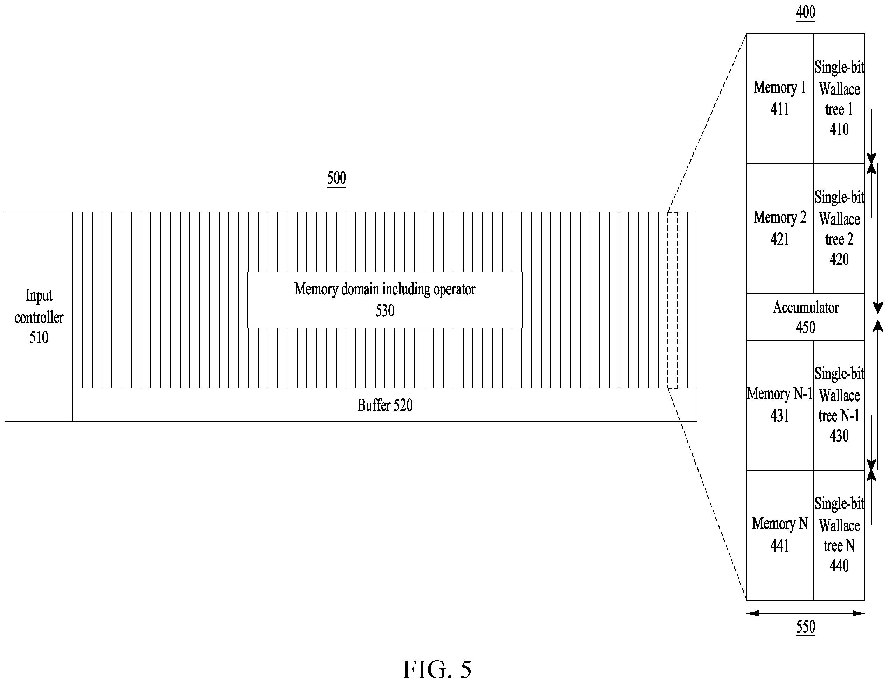

FIG. 5 illustrates an example of space efficiency of a memory device for implementing a computation method of a single-bit operation gate-based memory processor according to one or more example embodiments.

According to some embodiments, a memory device 500 may include an input controller 510, a buffer 520, and a memory domain 530 including an operator, and may have a memory column length 550.

The input controller 510 may correspond to the input controller 130 of FIG. 1. The buffer 520 may be a space for temporarily storing data.

The memory domain 530 including the operator may include a plurality of memory columns (represented by vertical bars). The memory domain 530 may include 64 memory columns. The memory columns may each have the memory column length 550 as shown in FIG. 5. The memory column length 550 may be determined based on the number of adders or the number of partial product steps in a matrix multiplication. For example, in a multiplication operation of vectors, there may be steps for adding stepwise partial products. For example, in a 16-bit operation, when two bits are grouped and partial products are added stepwise, the number of adders may be 8 (step 1) + 4 (step 2) + 2 (step 3) + 1 (step 4). For another example, when partial products are added stepwise based on a Wallace tree, three bits may be grouped and the partial products may be added stepwise, and thus the number of adders may be 11, which is less than a typical number of adders, namely, 15.

As the number of bits of a vector, which is an operation target (an operand), increases, such a difference in the number of adders may increase. In addition, since the number of steps for partial sums decreases significantly by using the Wallace tree, the number of adders used may also decrease, and the space efficiency of the memory device 500 may thereby increase.

In addition, the memory column length 550 may decrease as the number of adders decreases or the number of steps for partial sums decreases. As the memory column length 550 decreases, the number of memories or operators that may be arranged in a limited area of the memory device 500 may increase. Accordingly, using a single-bit operation gate in a matrix multiplication and adding bit operation results through the Wallace tree, it is possible to configure a memory device that is capable of performing in-memory processing (IMP) using a small space.

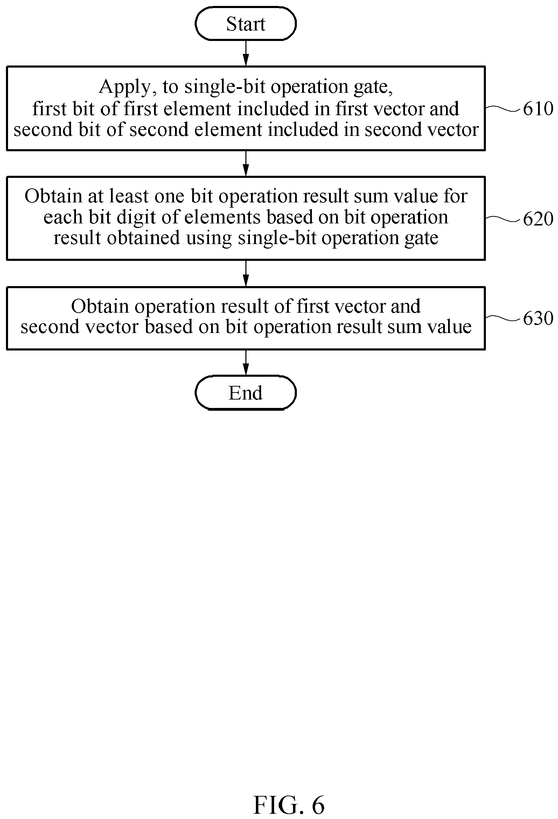

FIG. 6 illustrates an example of a computation method of a memory processor according to one or more example embodiments.

In operation 610, a memory device (e.g., the memory device 500) may apply, to a single-bit operation gate, a first bit of a first element included in a first vector and a second bit of a second element included in a second vector.

The single-bit operation gate may perform an AND operation or an XOR operation based on an operation control signal. As described above with reference to FIG. 2, the single-bit operation gate may perform an AND operation or an NXOR operation based on an operation control signal.

In operation 620, the memory device 500 may obtain at least one bit operation result sum value for each bit digit of the elements based on bit operation results obtained using the single-bit operation gate.

As described above with reference to FIG. 1, the bit operation result sum value may be a result of adding the bit operation results or a result of adding the bit operation results based on a circuit or hardware implementing approximate arithmetic.

In operation 630, the memory device 500 may obtain an operation result of the first vector and the second vector based on the bit operation result sum value.

For example, as described above with reference to FIG. 3, when the single-bit operation gate performs an AND operation, the memory device 500 may obtain a multiplication result of the first vector and the second vector. For another example, when the single-bit operation gate performs an XOR (or XNOR) operation, the memory device 500 may obtain a similarity between the first vector and the second vector.

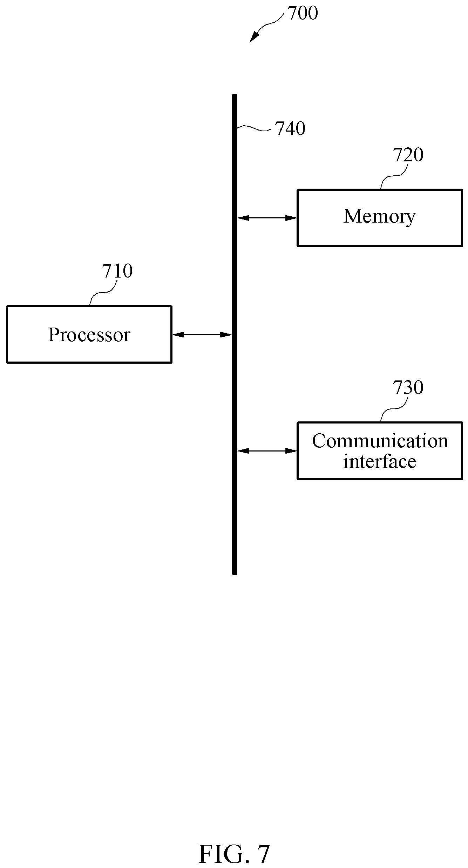

FIG. 7 illustrates an example of an electronic device according to one or more example embodiments.

Referring to FIG. 7, an electronic device 700 may include a memory 720, a processor 710, and a communication interface 730. The memory 720, the processor 710, and the communication interface 730 may be connected through a communication bus 740.

The memory 720 correspond to the memory device 500 of FIG. 5. The memory 720 may store various pieces of information generated in a processing process of the processor 710 described above. In addition, the memory 720 may store various pieces of data and programs. The memory 720 may include a volatile memory or a non-volatile memory. The memory 720 may include a high-capacity storage medium such as a hard disk to store various pieces of data.

The processor 710 may be a hardware-implemented device having a physically structured circuit to execute desired operations. The desired operations may include, for example, codes or instructions included in a program. The hardware-implemented device may include, for example, a microprocessor, a CPU, a GPU, a processor core, a multi-core processor, a multiprocessor, an application-specific integrated circuit (ASIC), a field-programmable gate array (FPGA), an NPU, or the like.

The processor 710 may execute the program and control the electronic device 700. The codes of the program executed by the processor 710 may be stored in the memory 720.

The examples described herein may be implemented using hardware components, software components and/or combinations thereof. A processing device may be implemented using one or more general-purpose or special purpose computers, such as, for example, a processor, a controller, an arithmetic logic unit (ALU), a digital signal processor, a microcomputer, a field programmable gate array (FPGA), a programmable logic unit (PLU), a microprocessor, or any other device capable of responding to and executing instructions in a defined manner. The processing device may run an operating system (OS) and one or more software applications that run on the OS. The processing device also may access, store, manipulate, process, and create data in response to execution of the software. For purpose of simplicity, the description of a processing device is used as singular; however, one skilled in the art will appreciated that a processing device may include multiple processing elements and multiple types of processing elements. For example, a processing device may include multiple processors or a processor and a controller. In addition, different processing configurations are possible, such as, parallel processors.

The computing apparatuses, the processors, the memories, the information output system and hardware, the storage devices, and other apparatuses, devices, units, modules, and components described herein with respect to FIGS. 1-7 are implemented by or representative of hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-7 that perform the operations described in this application are performed by computing hardware, for example, by one or more processors or computers, implemented as described above implementing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media. Examples of a non-transitory computer-readable storage medium include read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD- Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, in addition to the above disclosure, the scope of the disclosure is defined by the enclosed claims.

## Claims

1. A computation method of a memory processor configured to perform an operation between a first vector comprising first elements and a second vector comprising second elements, the first elements comprising respective first bits and the second elements comprising respective second bits, the method performed by the memory processor comprising:
applying, to single-bit operation gates, the respective first bits and the respective second bits;
obtaining bit operation result sum values for the respective first and second elements based on bit operation results obtained using the single-bit operation gates; and
obtaining an operation result of the first vector and the second vector based on the bit operation result sum value.

2. The method of claim 1, wherein the first vector is data input through an input controller, and the second vector is data stored in the memory processor, or
wherein the first vector is input data, and the second vector is weight data.

3. The method of claim 1 or 2, wherein the single-bit operation gates are configured to perform at least one of an AND operation or an XOR operation, or
wherein the single-bit operation gates are configured to be capable of performing at least two operations from the group of an AND operation, an OR operation, a NOR operation, a NOT operation, a NAND operation, and an XOR operation, and wherein which of the two operations is performed is based on an operation control signal.

4. The method of one of claims 1 to 3, wherein the first bits and the second bits are applied to the single-bit operation gates as part of a process of sequentially applying bits of the elements of the vectors to the single-bit operation gates, and
wherein the sequentially applying starts with a most significant bit, MSB, or a least significant bit, LSB, of each of the elements.

5. The method of one of claims 1 to 4, wherein the obtaining of the bit operation result sum value comprises:
adding bit operation results respectively corresponding to the elements.

6. The method of claim 5, wherein the adding the bit operation results is performed by either using a single-bit Wallace tree or by using hardware implementing approximate arithmetic.

7. The method of one of claims 1 to 6, wherein the obtaining of the bit operation result sum value comprises:
obtaining a sum value determined based on whether the first bits and the respective second bits are the same.

8. The method of one of claims 1 to 7, wherein the obtaining of the operation result of the first vector and the second vector comprises one of:
when the single-bit operation gates are AND operation gates, obtaining a multiplication result of the first vector and the second vector based on the bit operation result sum value, and
when the single-bit operation gates are XOR operation gates, obtaining a similarity between the first vector and the second vector based on the bit operation result sum value.

9. A non-transitory computer-readable storage medium storing instructions that, when executed by a processor, cause the processor to perform the method of one of claims 1 to 8.

10. A memory device configured to perform an operation, comprising:
single-bit operation gates configured to perform an operation between respective first bits and respective second bits, the first bits being bits of respective first elements of a first vector, the second bits being bits of respective second elements of a second vector;
a summation module configured to obtain bit operation result sum values for the respective first and second elements based on bit operation results obtained using the single-bit operation gates; and
an arithmetic module configured to obtain a multiplication result of the first vector and the second vector or to obtain a similarity between the first vector and the second vector, based on the bit operation result sum value.

11. The memory device of claim 10, further comprising:
an input controller configured to sequentially apply bits of the first elements and bits of the second elements to the single-bit operation gates.

12. The memory device of claim 10 or 11, wherein the summation module comprises at least one of:
a first summation module configured to add the bit operation results; or
a second summation module configured to add the bit operation results for by implementing approximate arithmetic.

13. The memory device of claim 12, wherein the first summation module has at least one single-bit Wallace tree structure, or
wherein the second summation module comprises an accumulator comprising at least one of a NAND operation gate or an OR operation gate, and is configured to obtain an adding result based on approximate arithmetic.

14. The memory device of one of claims 10 to 13, wherein the arithmetic module comprises at least one of a multiplexer, MUX, an adder, a shift adder configured to obtain a multiplication result based on the bit operation result sum value, or an accumulator configured to store an intermediate arithmetic value received from the shift adder.

15. The memory device of claim 14, wherein, when the operation is a multiplication of the first vector and the second vector, the MUX is configured to apply the bit operation result sum value to the shift adder, or
wherein, when the operation calculates a similarity between the first vector and the second vector, the MUX is configured to apply the bit operation result sum value to the adder.
